# EUROPÄISCHE PATENTSCHRIFT

(11) **EP 3 841 555 B1**
(45) Veröffentlichungstag und Bekanntmachung des Hinweises auf die Patenterteilung: **27.11.2024**
(21) Anmeldenummer: 19737020.8
(22) Anmeldetag: 28.06.2019
(51) Int. Cl.: G06T 7/00, G06T 7/254

(54) **VERFAHREN ZUR ÜBERWACHUNG DES LADERAUMS IN EINEM FAHRZEUG**
METHOD FOR MONITORING THE LOAD COMPARTMENT IN A VEHICLE
PROCÉDÉ DE SURVEILLANCE DE L'ESPACE DE CHARGE DANS UN VÉHICULE

(30) Priorität: 21.08.2018 DE 102018120333
(43) Veröffentlichungstag der Anmeldung: 30.06.2021
(73) Patentinhaber: ZF CV Systems Europe BV, 1170 Brussels (BE)
(72) Erfinder: GENCASLAN, Umut, 30451 Hannover (DE); WOLF, Thomas, 30890 Barsinghausen (DE); BUCHNER, Dennis, 31157 Sarstedt (DE); KLINGER, Tobias, 31832 Springe (DE); PFEFFERKORN, Daniel, 30159 Hannover (DE); VAN RAEMDONCK, Gandert Marcel Rita, 2611 PW DELFT (NL)
(74) Vertreter: Ohlendorf, Henrike
(86) Internationale Anmeldenummer: PCT/EP2019/067281
(87) Internationale Veröffentlichungsnummer: WO 2020/038631

(56) Entgegenhaltungen:
- WO-A1-2005/056350
- DE-B3- 102005 001 480
- US-B2- 7 746 379

## Beschreibung

Die Erfindung betrifft ein Verfahren zur Überwachung eines Laderaums in einem Fahrzeug, unter Verwendung eines im Laderaum installierten optischen Sensors, eines Computersystems mit Software zur Bildverarbeitung und einer grafischen Benutzeroberfläche. Die Erfindung betrifft außerdem ein Steuergerät zur Durchführung des Verfahrens sowie ein Fahrzeug mit Steuergerät.

Laderäume in Fahrzeugen werden oftmals nicht vollständig genutzt, da dem Betreiber des Fahrzeugs nicht jederzeit vollständige Informationen über den Beladungszustand vorliegen. Erwünscht ist außerdem eine Ladungsüberwachung während der Fahrt.

Aus der DE 10 2006 028 627 A1 ist ein Verfahren zur Ladungsüberwachung bekannt, bei dem mittels einer Kamera Bildinformationen der Ladung erfasst und anhand eines Differenzbildverfahrens ausgewertet werden. Das Differenzbild wird auf einer Anzeigeeinheit im Fahrzeuginnenraum dargestellt.

Kamerabilder der Ladung oder aus Kamerabildern erzeugte Differenzbilder erlauben eine grobe Einschätzung der Belegung des Laderaums und/oder der noch freien Fläche im Laderaum. Für den Betreiber wichtig ist oftmals eine Auskunft darüber, ob und in welchem Umfang der Laderaum mit im Transportwesen üblichen Größeneinheiten belegt ist und/oder mit wieviel Größeneinheiten der Laderaum zusätzlich noch belegbar ist. Um diese Frage zu beantworten, müsste der Benutzer das aufgenommene Kamerabild aufwendig analysieren.

US 7,746,379 B2 offenbart ein Erfassen von Ladegut in einem Laderaum, indem mit einer Kamera mindestens ein Teil des Laderaums erfasst und so ein Kamerabild aufgenommen wird. Das Kamerabild wird ausgewertet und danach klassifiziert, ob es einen leeren oder einen nicht-leeren Laderaum darstellt. Es wird ebenfalls klassifiziert, welcher Typ Ladegut (z. B. Kiste oder Fass) dargestellt ist. Ob ein leerer oder ein nicht-leerer Laderaum vorliegt, wird ausgegeben, wobei als Beispiel ein Status eines einzelnen Bits "leer" oder "nicht-leer" angegeben ist.

Aufgabe der vorliegenden Erfindung ist es, ein Verfahren bereitzustellen, mit dem die Belegung oder Nicht-Belegung des Laderaums in vordefinierten Größeneinheiten möglich ist. Vorzugsweise soll auch eine Ladungsüberwachung möglich sein.

Zur Lösung der Aufgabe weist das erfindungsgemäße Verfahren die Merkmale des Anspruchs 1 auf. Es ist in diesem Verfahren vorgesehen, dass im Computersystem ein Raster R des Laderaums hinterlegt ist, dass ein vom optischen Sensor zu einem Zeitpunkt t₁ aufgenommenes Bild I (t₁) im Computersystem umgerechnet wird in ein Rasterbild RI, welches die Belegung, Nicht-Belegung oder Belegungs-Veränderung des Laderaums gemäß dem hinterlegten Raster R abbildet, und dass das Rasterbild RI auf der grafischen Benutzeroberfläche angezeigt wird.

Der optische Sensor ist im Laderaum vorzugsweise (bezogen auf die Fahrtrichtung) hinten und oben mittig angeordnet, also mit Blickrichtung nach vorn auf eine insbesondere geschlossene vordere Stirnseite des Laderaums. Unterhalb des Sensors ist vorzugsweise der Zugang zum Laderaum. Die aufgenommene Ladung wird mit möglichst kurzer Entfernung zur vorderen Stirnseite des Laderaums positioniert. Dadurch werden nicht belegte und vom Sensor nicht einsehbare Flächen vermieden.

Das Raster kann einen Boden des Laderaums in für den Benutzer einfach abzählbare Bereiche aufteilen, ähnlich der Belegung eines Schachbretts, jedoch angepasst an eine Bodenfläche des Laderaums, der bei einem Nutzfahrzeug typischerweise lang und schmal ausgebildet ist. Vorzugsweise beinhaltet das Raster wenige Reihen mit vielen Zeilen, das heißt eine einstellige Anzahl an Reihen, insbesondere im niedrigen einstelligen Bereich (< 5), sowie eine einstellige Anzahl an Zeilen oder eine Anzahl an Zeilen im niedrigen zweistelligen Bereich (< 30).

Das Rasterbild kann das Raster mit verschiedenen Farben, Grautönen oder schwarz-weiß wiedergeben. Die Belegung oder Nicht-Belegung des Laderaums ist dann aus den Farben, Grautönen oder der schwarz oder weißen Darstellung ersichtlich. Auch können Ziffern oder Buchstaben in die Felder des Rasters eingetragen sein. Das Rasterbild liefert schneller und einfacher eine Übersicht über die Belegung/Nicht-Belegung des Laderaums als ein Sensorbild.

Vorzugsweise ist der optische Sensor eine Kamera. Es können aber auch andere optische Sensoren verwendet werden, etwa mit Infrarottechnik oder Radartechnik.

Vorteilhafterweise wird das vom optische Sensor aufgenommene Bild in relativ kurzen Zeitabschnitten in das Rasterbild umgerechnet und auf der Benutzeroberfläche angezeigt. Veränderungen zum letzten Rasterbild können zusätzlich auf der Benutzeroberfläche angezeigt werden. Dadurch ist auch eine Ladungsüberwachung möglich.

Nach einem weiteren Gedanken der Erfindung kann das Raster R an Größe und Form von insbesondere im Transportwesen verwendeten Behältern oder Paletten angepasst sein. So kann ein Feld des Rasters den Abmessungen einer Euro-Palette, einer anderen Palette, einer Gitterbox definierter Größe, der Standfläche eines Kartons definierter Größe, herstellerspezifischer Behälter oder Paletten entsprechen.

Nach einem weiteren Gedanken der Erfindung kann das Raster R zweidimensional also flächig vorgesehen sein. Berücksichtigt wird nur eine belegte/unbelegte Bodenfläche des Laderaums. Das heißt, wenn an einer Stelle etwas steht, dann gilt auch der gesamte Raum darüber als belegt. In der Praxis wird davon ausgegangen, dass die vom optische Sensor am weitesten entfernte Bodenfläche zuerst belegt wird und die Fläche unter dem optische Sensor zuletzt. In dem vom optische Sensor aufgenommenen Bild ist die nicht belegte Fläche sichtbar und weist im Normalfall eine andere Farbe oder einen anderen Grauwert auf als die Behälter oder Paletten auf der belegten Bodenfläche. Dadurch ist eine Unterscheidung leicht möglich.

Nach einem weiteren Gedanken der Erfindung kann das Raster R dreidimensional, also räumlich sein. Das Raster besteht dann aus Reihen (nebeneinander), Zeilen (hintereinander) und Lagen (übereinander). Die Anzahl der Lagen liegt vorzugsweise im einstelligen, insbesondere im niedrigen einstelligen Bereich (< 5). Bei der Auswertung des Sensorbildes wird berücksichtigt, wie hoch im Laderaum vorhandene Güter relativ zur Stirnwand und zu den Seitenwänden stehen. Auf der grafischen Benutzeroberfläche können die unterschiedlichen Höhen mit unterschiedlichen Farbtönen, Grauwerten, Ziffern, Buchstaben oder anderen Zeichen wiedergegeben werden.

Nach einem weiteren Gedanken der Erfindung kann das Bild I (t₁) im Computersystem verglichen werden mit einem gespeicherten, zu einem früheren Zeitpunkt t₀ aufgenommenen Bild I (t₀), wobei ein Differenzbild I (t₁-t₀) erzeugt und in ein Rasterbild RI (t₁-t₀) umgerechnet wird, und wobei das Rasterbild RI (t₁-t₀) auf der grafischen Benutzeroberfläche GUI angezeigt wird. Das zum früheren Zeitpunkt t₀ aufgenommene Bild I (t₀) dient dann als Referenzbild und zeigt entweder den leeren Laderaum oder den Laderaum nach der letzten Veränderung oder generell ein letztes Bild des Laderaums. Das Rasterbild RI (t₁-t₀) zeigt dann die Veränderung der Bilder als Raster an.

Nach einem weiteren Gedanken der Erfindung kann vorgesehen sein, dass das Rasterbild RI (t₁) vom Computersystem verglichen wird mit einem gespeicherten, zu einem früheren Zeitpunkt t₀ erzeugten Rasterbild RI (t₀), und dass aus dem Vergleich ein Rasterbild RI (t₁-t₀) erzeugt und auf der grafischen Benutzeroberfläche (GUI) angezeigt wird. In diesem Fall wird nicht das zu einem früheren Zeitpunkt aufgenommene Bild verglichen, sondern das zu einem früheren Zeitpunkt erzeugte Rasterbild. Das anzuzeigende Rasterbild RI (t₁-t₀) wird dann aus zwei Rasterbildern RI (t₁), RI (t₀) berechnet und nicht aus einem Differenzbild.

Nach einem weiteren Gedanken der Erfindung kann ein Rasterbild inkrementell erzeugt werden, wobei
- zum Zeitpunkt t₀ ein Bild I (t₀),
- zum Zeitpunkt t₁ ein Bild I (t₁),
- zum Zeitpunkt t₂ ein Bild I (t₂)
aufgenommen wird,
und wobei aus den Bildern I (t₀),I (t₁) ein Differenzbild I (t₁-t₀) oder Rasterbild RI (t₁-t₀) erzeugt wird und durch zusätzliche Verarbeitung des Bildes I (t₂) schließlich ein Rasterbild RI (t₂-t₀) erzeugt wird. Somit werden nicht das erste Bild I (t₀) und das letzte Bild I (t₂) miteinander verglichen, um zum Rasterbild RI (t₂-t₀) zu gelangen. Vielmehr wird inkrementell vorgegangen, indem zunächst das erste Bild I (t₀) mit dem zweiten Bild I (t₁) und dann das zweite Bild I (t₁) mit dem dritten Bild I (t₂) verglichen werden. Auch hier können zunächst die Bilder miteinander verglichen und aus dem Ergebnis aller Vergleiche das gewünschte Rasterbild RI (t₂-t₀) erzeugt werden. Alternativ können aus jedem Bild zunächst das zugehörige Rasterbild erzeugt und dann die Rasterbilder miteinander verglichen werden. In allen Fällen ist das Ergebnis das anzuzeigende Rasterbild RI (t₂-t₀).

Die inkrementelle Erzeugung des Rasterbildes RI ist nicht beschränkt auf drei Bilder der Zeitpunkte t₀, t₁, t₂. Vielmehr kann ein Rasterbild aus beliebig vielen Bildern I (t₀), I (t₁), ..., I (tₙ) inkrementell erzeugt werden. Vorzugsweise steht nach jeder Verarbeitung eines zusätzlichen Bildes ein entsprechendes Rasterbild RI (t₁₋t₀), RI (t₂₋t₀), RI (tₙ₋t₀) zum Abruf zur Verfügung oder wird angezeigt. Auf diese Weise kann ein Benutzer die Veränderung des Rasterbildes auf der grafischen Benutzeroberflächen nachverfolgen.

Während des Be- und Entladens kann sich das von der Kamera aufgenommene Bild kontinuierlich ändern, etwa durch Bewegung einer Person oder eines Gabelstaplers. Um dies auszugleichen, kann vorgesehen sein, dass die Bilder I erst dann als solche festgehalten werden, wenn sie eine definierte Zeit lang unverändert sind, zum Beispiel 1 bis 100 Sekunden lang. Das heißt, der optische Sensor nimmt laufend oder in kurzen Takten auf. Wenn keine Veränderung im Zeitraum feststellbar ist, dann wird ein Bild für die weitere Verarbeitung festgehalten, z. B. das Bild I (t₁). Nach einem weiteren definierten Zeitraum, beispielsweise nach 5 bis 500 Sekunden, wird ein nächstes Bild daraufhin überprüft, ob es sich innerhalb der letzten 1 bis 100 Sekunden verändert hat. Wenn keine Veränderung aufgetreten ist, dann wird dieses nächste Bild als Bild I (t₂) festgehalten und verarbeitet. Diese Vorgehensweise kann in Verbindung mit allen anderen Aspekten angewendet werden und ist nicht beschränkt auf die inkrementelle Erzeugung des Rasterbildes.

Nach einem weiteren Gedanken der Erfindung kann das Rasterbild RI (t₁) aus den Bildern mehrerer im Laderaum installierter optischer Sensoren errechnet werden. Beispielsweise nehmen zum Zeitpunkt t₁ zwei oder mehr Kameras je ein Bild auf, woraus das Rasterbild RI (t₁) errechnet wird.

Nach einem weiteren Gedanken der Erfindung kann während der Aufnahme des Bildes I Licht einer künstlichen Lichtquelle den Laderaum beleuchten. Es können eine oder mehrere Lichtquellen vorgesehen sein, auch unterschiedlicher Art, wie sichtbares Licht, Infrarotlicht, Blitzlicht. Vorteilhaft sind gleiche Lichtverhältnisse für alle Bilder. In der Praxis können ohne Beleuchtung erhebliche Helligkeitsunterschiede auftreten. So kann ein von einer hellen Plane abgedeckter Laderaum bei Tageslicht relativ hell sein und schon in den Abendstunden deutlich dunkler.

Nach einem weiteren Gedanken der Erfindung kann die Aufnahme des Bildes I durch ein von Sensoren detektiertes Ereignis ausgelöst werden. Sensoren/Detektoren bzw. zugehörige Signale können zumindest folgende sein: Beschleunigkeitssensor, Geschwindigkeitssignal über CAN-Bus, Rauchdetektor, Flüssigkeitsdetektor (insbesondere am Boden), Temperatursensor, Feuchtigkeitssensor, Zustandsdetektor am Fahrzeug (z. B. Türen auf/zu).

Nach einem weiteren Gedanken der Erfindung kann die Anzeige des Rasterbildes RI auf der grafischen Benutzeroberfläche durch ein von Sensoren detektiertes Ereignis ausgelöst werden. Entsprechende Sensoren/Detektoren bzw. Signale sind im voranstehenden Abschnitt bereits genannt.

Nach einem weiteren Gedanken der Erfindung kann vorgesehen sein, dass das Rasterbild RI nur dann vom Computersystem als gültiges Rasterbild abgespeichert und/oder weiterverarbeitet wird, nachdem das Rasterbild RI auf der grafischen Benutzeroberfläche angezeigt und durch eine Eingabe in eine Benutzer-Schnittstelle bestätigt wurde. Benutzer-Schnittstelle kann die grafische Benutzeroberfläche oder eine Taste oder eine Schnittstelle anderer Art sein.

Gegenstand der Erfindung ist auch ein Steuergerät mit Schnittstellen für einen optischen Sensor und eine grafische Benutzeroberfläche, und mit Software zur Durchführung des Verfahrens nach einem der Ansprüche 1 bis 12. Insbesondere handelt es sich um ein Bremsensteuergerät eines elektronischen Bremssystems. Die Schnittstellen können drahtlos oder drahtgebunden sein. Die grafische Benutzeroberfläche ist vorzugsweise an einen Computer mit einer geeigneten Software angeschlossen oder Teil des Computers. Der Computer ist beispielsweise ein Mobiltelefon oder ein Navigationscomputer mit einer App.

Gegenstand der Erfindung ist auch ein Fahrzeug mit einem Steuergerät nach Anspruch 13. Das Fahrzeug weist insbesondere ein elektronisches Bremssystem mit Bremsensteuergerät auf. Vorzugsweise ist das erfindungsgemäße Steuergerät das Bremsensteuergerät des elektronischen Bremssystems. Bei dem Fahrzeug handelt es sich insbesondere um ein Nutzfahrzeug, etwa eine Zugmaschine, einen Anhänger oder Auflieger.

Weitere Merkmale der Erfindung ergeben sich aus der Beschreibung im Übrigen und aus den Patentansprüchen. Vorteilhafte Ausführungsbeispiele der Erfindung werden nachfolgend anhand von Zeichnungen näher erläutert. Es zeigen:
- Fig. 1: eine schematische Darstellung eines Nutzfahrzeugs, nämlich einer Zugmaschine mit Auflieger,
- Fig. 2: ein erstes Rasterbild im Raster 3 x 11,
- Fig. 3: ein zweites Rasterbild im Raster 2 x 17,
- Fig. 4: ein Ablaufdiagramm.

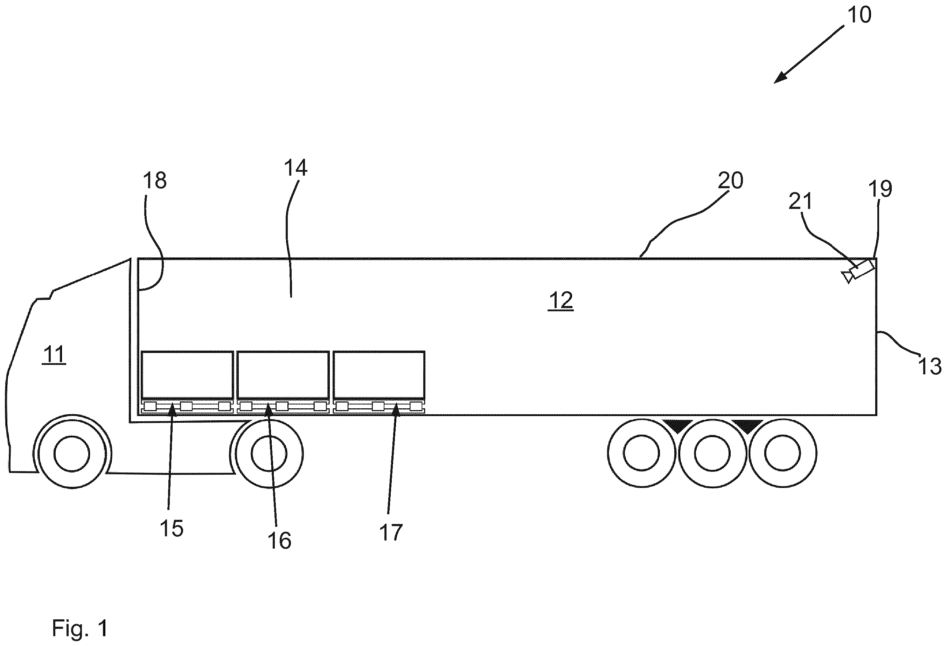

Ein in Fig. 1 gezeigtes Nutzfahrzeug 10 besteht aus einer Zugmaschine 11 und einem Auflieger 12. Der Auflieger weist einen insbesondere von seiner rückwärtigen Stirnseite 13 oder seitlich zugänglichen Laderaum 14 auf.

Im Laderaum 14 sind drei Zeilen 15, 16, 17 von Paletten in Fahrtrichtung hintereinander angeordnet, nämlich ausgehend von einer frontseitigen Stirnwand 18.

Oben an der rückwärtigen Stirnseite 13, im Bereich eines Winkels 19 zu einer Oberwand 20 ist mittig (bezogen auf die Breite des Aufliegers 12) eine Kamera 21 als optischer Sensor angeordnet. Die Kamera 21 ist schräg abwärts gerichtet und soll den Laderaum 14 möglichst vollständig erfassen. Alternativ können auch mehrere Kameras vorgesehen sein.

Der Auflieger 12 weist in an sich bekannter Weise ein elektronisches Bremssystem auf. Ein nicht gezeigtes Bremsensteuergerät oder ein anderes Computersystem empfängt die Bilder der Kamera 21 und erzeugt daraus Rasterbilder RI, aus denen die Belegung des Laderaums 14 anhand eines Rasters R erkennbar ist.

Im Computersystem ist das Raster R für den Laderaum 14 hinterlegt. Vorteilhafterweise orientiert sich das Raster R an den Proportionen der verwendeten Transporthilfsmittel. Als Transporthilfsmittel werden hier Behälter, Paletten oder andere Hilfsmittel verstanden, mit denen Güter zusammengefasst oder aufgenommen werden können und deren Abmessungen genormt, zumindest bekannt sind. Im vorliegenden Beispiel sind sogenannte Euro-Paletten vorgesehen, mit Außenabmessungen 1200 mm x 800 mm (auch Europoolpaletten genannt). Diese haben den Vorteil, dass zwei Paletten in Längsrichtung so viel Länge einnehmen wie drei Paletten in Querrichtung.

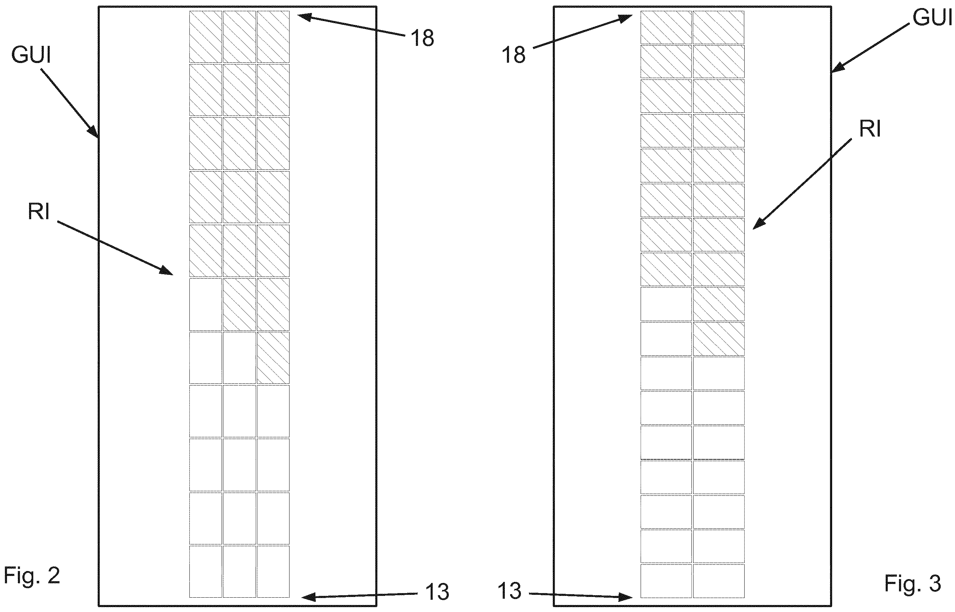

Fig. 2 zeigt ein Rasterbild RI des Laderaums 14 mit einem Raster einer Aufteilung 3 Reihen x 11 Zeilen. Entsprechend dem Beispiel in Fig. 2 sind fünf Zeilen des Rasters vollständig belegt. Eine sechste Zeile ist zu 2/3 belegt und eine siebte Zeile zu 1/3, also anders als in Fig. 1. Das Rasterbild in Fig. 2 wurde aus einem Bild der Kamera 21 im Computersystem erzeugt durch Bildverarbeitung, Abgleich mit dem leeren Laderaum und Vergleich mit dem hier vorgesehenen Raster 3 x 11. Das Rasterbild RI wird für den Benutzer auf einer grafischen Benutzeroberfläche GUI dargestellt, etwa auf einem Bildschirm seines Navigationsgerätes oder dem Display seines Mobiltelefons in Verbindung mit einer App.

Durch den Vergleich bzw. die Anpassung des von der Kamera aufgenommenen Bildes an das Raster R kann in der Praxis das Rasterbild den Sachverhalt abweichend vom Bild der Kamera darstellen, etwa dann, wenn unterschiedliche Transporthilfsmittel (Paletten usw.) und/oder kleinteiligere Transporthilfsmittel als dies dem Raster entsprechen würde, verwendet werden. Vorzugsweise ist deshalb das Raster R variabel bzw. vom Benutzer einstellbar oder vorgebbar.

Fig. 3 zeigt ein Rasterbild eines anderen Rasters R, nämlich für ein Raster in der Aufteilung 2 Reihen x 17 Zeilen. Auch hier handelt es sich vorzugsweise um eine Aufteilung entsprechend den Abmessungen von Euro-Paletten.

Im Beispiel der Fig. 3 ist aus dem Rasterbild eine Belegung der (ausgehend von der frontseitigen Stirnwand 18) ersten acht Zeilen vollständig und der beiden anschließenden Zeilen halb erkennbar. Die übrigen Plätze im Raster sind frei und können noch belegt werden.

Für den Benutzer sind zwei Fragestellungen von besonderer Bedeutung:
1. Eine Information über den aktuellen Beladezustand, ohne das Erfordernis einer Inaugenscheinnahme des Laderaums;
2. Informationen über eine Änderung des Beladungszustands während der Zeiträume, in denen eine Änderung nicht erwartet wird, also insbesondere bei nicht geöffnetem Laderaum, während der Fahrt und/oder außerhalb definierter Arbeitszeiten.

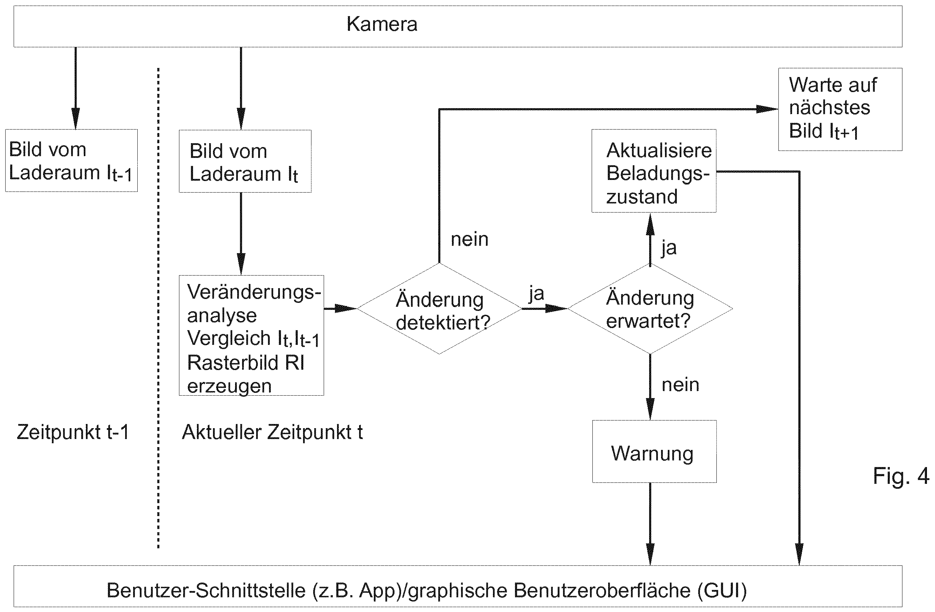

In Fig. 4 ist der Ablauf der Laderaumüberwachung durch Bildverarbeitung dargestellt:
Zu einem aktuellen Zeitpunkt t wird ein Bild Iₜ vom Laderaum aufgenommen und mit einem zuvor während eines Zeitpunkts t-1 aufgenommenen Bild Iₜ₋₁ verglichen. Aus dem Vergleich wird ein Rasterbild RI erzeugt. Dabei ist im Rasterbild RI eine Änderung des Bildes Iₜ zum Bild Iₜ₋₁ dargestellt, etwa durch Grauwerte, Farben, Symbole, Schraffuren. Sofern die beiden Bilder übereinstimmen, findet keine weitere Aktion statt. Vielmehr wird das Eintreffen des nächsten Bildes Iₜ₊₁ abgewartet.

Sofern die Bilder Iₜ und Iₜ₋₁ nicht übereinstimmen, wird eine Änderung der Beladung angenommen und geprüft, ob eine Änderung zu erwarten war. Kriterien hierfür können beispielsweise definierte Arbeitszeiten, die Geschwindigkeit und/oder der Zustand einer Tür des Laderaums (offen oder geschlossen) sein. Bei Stillstand des Fahrzeugs und offener Tür während üblicher Arbeitszeiten wird mit einer Änderung des Beladungszustands gerechnet und das errechnete Rasterbild RI über eine Benutzer-Schnittstelle bereitgestellt, insbesondere auf einem Display angezeigt.

Sofern eine Änderung des Beladungszustands nicht erwartet wird, wird über die Benutzer-Schnittstelle eine Warnung ausgegeben, etwa ein akustisches oder optisches Signal. Außerdem wird das errechnete Rasterbild RI angezeigt. Der Benutzer hat nun die Möglichkeit die ausgegebene Warnung anhand der Benutzer-Schnittstelle zu quittieren und den Laderaum zu kontrollieren.

Die Kamera 21 im Laderaum nimmt aus einzelnen Pixeln bestehende Bilder auf. Beim Vergleich der Bilder Iₜ, Iₜ₋₁ werden die jeweiligen Pixel miteinander verglichen. Schon kleine Unterschiede in der Ausrichtung der Kamera 21 führen zu Abweichungen aller Pixel, etwa durch Erschütterungen während der Fahrt oder während des Ladevorgangs. Vorzugsweise findet deshalb vor einem Vergleich der Bilder ein sogenanntes Alignment statt. Das heißt, die Bilder werden pixelgenau aufeinander ausgerichtet. Dies ist durch softwareseitige Bildverarbeitung möglich und bekannt.

### Bezugszeichenliste (Teil der Beschreibung)

- 10: Nutzfahrzeug
- 11: Zugmaschine
- 12: Auflieger
- 13: rückwärtige Stirnseite
- 14: Laderaum
- 15: Zeile
- 16: Zeile
- 17: Zeile
- 18: frontseitige Stirnwand
- 19: Winkel
- 20: Oberwand
- 21: Kamera

- GUI: grafische Benutzeroberfläche
- RI: Rasterbild

## Patentansprüche

1. Verfahren zur Überwachung eines Laderaums (14) in einem Fahrzeug (10), unter Verwendung eines im Laderaum (14) installierten optischen Sensors (21), eines Computersystems mit Software zur Bildverarbeitung und einer grafischen Benutzeroberfläche (GUI),
**dadurch gekennzeichnet, dass** im Computersystem ein Raster R des Laderaums (14) hinterlegt ist, dass ein vom optischen Sensor (21) zu einem Zeitpunkt t₁ aufgenommenes Bild I (t₁) im Computersystem umgerechnet wird in ein Rasterbild RI, welches die Belegung, Nicht-Belegung oder Belegungs-Veränderung des Laderaums (14) gemäß dem hinterlegten Raster R abbildet, und dass das Rasterbild RI auf der grafischen Benutzeroberfläche (GUI) angezeigt wird.

2. Verfahren nach Anspruch 1, **dadurch gekennzeichnet, dass** das Raster R an Größe und Form von Behältern oder Paletten angepasst ist.

3. Verfahren nach Anspruch 1 oder 2, **dadurch gekennzeichnet, dass** das Raster R zweidimensional, also flächig ist.

4. Verfahren nach Anspruch 1 oder 2, **dadurch gekennzeichnet, dass** das Raster R dreidimensional, also räumlich ist.

5. Verfahren nach einem der Ansprüche 1 bis 4, **dadurch gekennzeichnet, dass** das Bild I (t₁) im Computersystem verglichen wird mit einem gespeicherten, zu einem früheren Zeitpunkt t₀ aufgenommenen Bild I (t₀), dass ein Differenzbild I (t₁-t₀) erzeugt und in ein Rasterbild RI (t₁-t₀) umgerechnet wird, und dass das Rasterbild RI (t₁-t₀) auf der grafischen Benutzeroberfläche (GUI) angezeigt wird.

6. Verfahren nach einem der Ansprüche 1 bis 4, **dadurch gekennzeichnet, dass** das Rasterbild RI (t₁) vom Computersystem verglichen wird mit einem gespeicherten, zu einem früheren Zeitpunkt t₀ erzeugten Rasterbild RI (t₀), und dass aus dem Vergleich ein Rasterbild RI (t₁-t₀) erzeugt und auf der grafischen Benutzeroberfläche (GUI) angezeigt wird.

7. Verfahren nach einem der Ansprüche 1 bis 6, **dadurch gekennzeichnet, dass** ein Rasterbild (RI) inkrementell erzeugt wird, wobei
- zum Zeitpunkt t₀ ein Bild I (t₀),
- zum Zeitpunkt t₁ ein Bild I (t₁),
- zum Zeitpunkt t₂ ein Bild I (t₂)
aufgenommen wird,
und wobei aus den Bildern I (t₀), I (t₁) ein Differenzbild I (t₁-t₀) oder Rasterbild RI (t₁-t₀) erzeugt und durch Verarbeitung des Bildes I (t₂) schließlich ein Rasterbild RI (t₂-t₀) erzeugt wird.

8. Verfahren nach einem der Ansprüche 1 bis 7, **dadurch gekennzeichnet, dass** das Rasterbild RI aus den Bildern mehrerer im Laderaum (14) installierter optischen Sensoren (21) errechnet wird.

9. Verfahren nach einem der Ansprüche 1 bis 8, **dadurch gekennzeichnet, dass** während der Aufnahme des Bildes I Licht einer künstlichen Lichtquelle den Laderaum beleuchtet.

10. Verfahren nach einem der Ansprüche 1 bis 9, **dadurch gekennzeichnet, dass** die Aufnahme des Bildes I durch ein von Sensoren detektiertes Ereignis ausgelöst wird.

11. Verfahren nach einem der Ansprüche 1 bis 10, **dadurch gekennzeichnet, dass** die Anzeige des Rasterbildes RI auf der grafischen Benutzeroberfläche (GUI) durch ein von Sensoren detektiertes Ereignis ausgelöst wird.

12. Verfahren nach einem der Ansprüche 1 bis 11, **dadurch gekennzeichnet, dass** das Rasterbild RI nur dann vom Computersystem als gültiges Rasterbild abgespeichert und/oder weiterverarbeitet wird, nachdem das Rasterbild RI auf der grafischen Benutzeroberfläche (GUI) angezeigt und durch eine Eingabe in eine Benutzer-Schnittstelle bestätigt wurde.

13. Steuergerät mit Schnittstellen für einen optischen Sensor und eine grafische Benutzeroberfläche (GUI), und mit Software zur Durchführung eines Verfahrens nach einem der Ansprüche 1 bis 12.

14. Fahrzeug mit Steuergerät nach Anspruch 13.

## Claims

1. Method for monitoring a loading space (14) in a vehicle (10), using an optical sensor (21) installed in the loading space (14), a computer system having image processing software and a graphical user interface (GUI),
**characterized in that** a raster R of the loading space (14) is stored in the computer system, **in that** an image I (t₁) captured by the optical sensor (21) at a point in time t₁ is converted in the computer system into a raster image RI, which depicts the occupancy, non-occupancy or occupancy change of the loading space (14) according to the stored raster R, **and in that** the raster image RI is displayed on the graphical user interface (GUI).

2. Method according to claim 1, **characterized in that** the raster R is adapted to the size and shape of containers or pallets.

3. Method according to either claim 1 or claim 2, **characterized in that** the raster R is two-dimensional, i.e. flat.

4. Method according to either claim 1 or claim 2, **characterized in that** the raster R is three-dimensional, i.e. spatial.

5. Method according to any of claims 1 to 4, **characterized in that** the image I (t₁) in the computer system is compared with a stored image I (t₀) captured at an earlier point in time t₀, **in that** a difference image I (t₁-t₀) is generated and converted into a raster image RI (t₁₋t₀), **and in that** the raster image RI (t₁-t₀) is displayed on the graphical user interface (GUI).

6. Method according to any of claims 1 to 4, **characterized in that** the raster image RI (t₁) is compared, by the computer system, with a stored raster image RI (t₀) generated at an earlier point in time t₀, **and in that** from the comparison, a raster image RI (t₁-t₀) is generated and displayed on the graphical user interface (GUI).

7. Method according to any of claims 1 to 6, **characterized in that** a raster image (RI) is generated incrementally, wherein
- at time t₀, an image I (t₀),
- at time t₁, an image I (t₁),
- at time t₂, an image I (t₂)
is captured,
and wherein a difference image I (t₁-t₀) or raster image RI (t₁-t₀) is generated from the images I (t₀), I (t₁) and finally a raster image RI (t₂-t₀) is generated by processing the image I (t₂).

8. Method according to any of claims 1 to 7, **characterized in that** the raster image RI is calculated from the images of a plurality of optical sensors (21) installed in the loading space (14).

9. Method according to any of claims 1 to 8, **characterized in that** while capturing image I, light from an artificial light source illuminates the loading space.

10. Method according to any of claims 1 to 9, **characterized in that** capturing image I is triggered by an event detected by sensors.

11. Method according to any of claims 1 to 10, **characterized in that** displaying the raster image RI on the graphical user interface (GUI) is triggered by an event detected by sensors.

12. Method according to any of claims 1 to 11, **characterized in that** the raster image RI is stored and/or further processed by the computer system as a valid raster image only after the raster image RI has been displayed on the graphical user interface (GUI) and confirmed by an input in a user interface.

13. Control unit comprising interfaces for an optical sensor and a graphical user interface (GUI) and comprising software for carrying out a method according to any of claims 1 to 12.

14. Vehicle comprising a control unit according to claim 13.

## Revendications

1. Procédé permettant la surveillance d'un espace de chargement (14) dans un véhicule (10) en utilisant un capteur optique (21) installé dans l'espace de chargement (14), un système informatique comportant un logiciel pour le traitement d'images et une interface utilisateur graphique (GUI),
**caractérisé en ce qu'**une trame R de l'espace de chargement (14) est enregistrée dans le système informatique, **en ce qu'**une image I (t₁) prise par le capteur optique (21) à un instant t₁ est convertie dans le système informatique en une image tramée RI qui représente l'occupation, la non-occupation ou la modification d'occupation de l'espace de chargement (14) conformément à la trame R enregistrée, **et en ce que** l'image tramée RI est affichée sur l'interface utilisateur graphique (GUI).

2. Procédé selon la revendication 1, **caractérisé en ce que** la trame R est adaptée à une taille et à une forme de récipients ou de palettes.

3. Procédé selon la revendication 1 ou 2, **caractérisé en ce que** la trame R est bidimensionnelle, c'est-à-dire plane.

4. Procédé selon la revendication 1 ou 2, **caractérisé en ce que** la trame R est tridimensionnelle, c'est-à-dire spatiale.

5. Procédé selon l'une des revendications 1 à 4, **caractérisé en ce que** l'image I (t₁) est comparée dans le système informatique à une image I (t₀) enregistrée et prise à un instant antérieur t₀, **en ce qu'**une image différentielle I (t₁-t₀) est générée et convertie en une image tramée RI (t₁-t₀), **et en ce que** l'image tramée RI (t₁-t₀) est affichée sur l'interface utilisateur graphique (GUI).

6. Procédé selon l'une des revendications 1 à 4, **caractérisé en ce que** l'image tramée RI (t₁) est comparée par le système informatique à une image tramée RI (t₀) enregistrée et générée à un instant antérieur t₀, **et en ce qu'**une image tramée RI (t₁-t₀) est générée à partir de la comparaison et est affichée sur l'interface utilisateur graphique (GUI).

7. Procédé selon l'une des revendications 1 à 6, **caractérisé en ce qu'**une image tramée (RI) est générée de manière incrémentielle, dans lequel est prise
- une image I (t₀) à l'instant t₀,
- une image I (t₁) à l'instant t₁,
- une image I (t₂) à l'instant t₂
et dans lequel une image différentielle I (t₁-t₀) ou une image tramée RI (t₁-t₀) est générée à partir des images I (t₀), I (t₁) et une image tramée RI (t₂-t₀) est finalement générée en traitant l'image I (t₂).

8. Procédé selon l'une des revendications 1 à 7, **caractérisé en ce que** l'image tramée RI est calculée à partir des images de plusieurs capteurs optiques (21) installés dans l'espace de chargement (14).

9. Procédé selon l'une des revendications 1 à 8, **caractérisé en ce que,** pendant la prise de l'image I, une lumière d'une source de lumière artificielle éclaire l'espace de chargement.

10. Procédé selon l'une des revendications 1 à 9, **caractérisé en ce que** la prise de l'image I est déclenchée par un événement détecté par des capteurs.

11. Procédé selon l'une des revendications 1 à 10, **caractérisé en ce que** l'affichage de l'image tramée RI sur l'interface utilisateur graphique (GUI) est déclenchée par un événement détecté par des capteurs.

12. Procédé selon l'une des revendications 1 à 11, **caractérisé en ce que** l'image tramée RI est enregistrée et/ou traitée ultérieurement par le système informatique en tant qu'image tramée valide uniquement après que l'image tramée RI a été affichée sur l'interface utilisateur graphique (GUI) et confirmée par une saisie dans une interface utilisateur.

13. Appareil de commande comportant des interfaces pour un capteur optique et une interface utilisateur graphique (GUI), et comportant un logiciel pour la mise en oeuvre d'un procédé selon l'une des revendications 1 à 12.

14. Véhicule comportant un appareil de commande selon la revendication 13.
